# EUROPÄISCHE PATENTSCHRIFT

(11) **EP 0 757 949 B1**
(45) Veröffentlichungstag und Bekanntmachung des Hinweises auf die Patenterteilung: **11.08.1999**
(21) Anmeldenummer: 96118149.2
(22) Anmeldetag: 10.04.1996
(51) Int. Cl.: B62B 3/18

(54) **Stapelbarer Einkaufswagen**
Nestable shopping trolley
Chariot d'achat emboîtable

(30) Priorität: 23.09.1995 DE 29515149 U; 28.09.1995 DE 29515238 U; 09.09.1995 DE 29514529 U; 20.04.1995 DE 29506748 U; 20.04.1995 DE 29506750 U
(43) Veröffentlichungstag der Anmeldung: 12.02.1997
(62) Teilanmeldung aus: 96105618.1
(73) Patentinhaber: Wanzl Metallwarenfabrik GmbH, 89336 Leipheim (DE)
(72) Erfinder: Eberlein, Herbert, 89347 Bubesheim (DE)

(56) Entgegenhaltungen:
- EP-A- 0 141 398

## Beschreibung

Die Erfindung betrifft einen stapelbaren Einkaufswagen, mit einem Fahrgestell, das einen Korb trägt, mit einer Schiebeeinrichtung und mit einer im rückwärtigen Bereich angeordneten, eine Abstellfläche aufweisenden und zum Abstellen von Gegenständen bestimmten Ablage, die nach rückwärts herausklappbar oder herausziehbar ist und die entweder voll Hand oder beim Stapeln mehrerer Einkaufswagen von einem hinteren einzuschiebenden Einkaufswagen in eine Verstaustellung bewegbar ist.

Einkaufswagen dieser Art werden in SB-Märkten den Kunden zur Verfügung gestellt. Während im Korb dieser Einkaufswagen das übliche Einkaufsgut abgestellt wird, dient die unterhalb des Korbes befindliche, nach hinten herausziehbare Ablage dazu, Getränkekisten oder andere großvolumige Gegenstände auf der Ablage, also außerhalb des Korbes zu transportieren. Wird die Ablage nicht mehr benötigt, kann man sie entweder von Hand in die Nichtgebrauchslage bewegen oder die herausgezogene Ablage eines vorausbefindlichen Einkaufswagens läßt sich von einem rückwärtigen, in den vorausbefindlichen Einkaufswagen einzuschiebenden Einkaufswagen während des Ineinanderschiebevorganges in die Verstaustellung bewegen. In dieser Lage befindet sich die Ablage bevorzugt unterhalb des Korbes, wobei nur die Rückseite der Ablage knapp unterhalb der hinteren Korbbodenbegrenzung angeordnet sichtbar ist. Typische Vertreter dieser Einkaufswagengattung sind beispielsweise in der EP 0 141 398 B1 näher beschrieben. Bei der praktischen Verwirklichung der in dieser Patentschrift geschilderten Idee hat sich ergeben, daß die Ablagen nur an solchen Einkaufswagen anbringbar sind, bei denen der senkrechte Abstand zwischen der hinteren Korbunterkante und der vorderen Querverbindung des Fahrgestelles ein bestimmtes Mindestmaß nicht unterschreitet. Dies rührt daher, daß erstens die in Längsrichtung des Einkaufswagens gemessene Tiefe der Abstellfläche bei jeder Ablage etwa 33cm betragen muß, um auch alle gängigen Getränkekisten abstellen zu können und daß zweitens die in der Verstaustellung der Ablage nach unten gerichteten Teile der Ablage, wie z.B. das Halteteil und der Ablageabschnitt des Schwenkteiles, so angeordnet sein müssen, daß diese Teile beim Stapeln zweier Einkaufswagen von der vorderen Querverbindung des Fahrgestelles eines rückwärtig einzuschiebenden Einkaufswagens unterfahren werden können. Ansonsten könnte der Stapelvorgang nicht durchgeführt werden. Inzwischen ist die Tendenz, Einkaufswagen mit großen Körben zu benutzen, unverkennbar. Da jedoch bei solchen Wagen die Zugänglichkeit zum Korb keinesfalls beeinträchtigt werden darf wird die Raumvergrößerung der Körbe meist durch eine Tieferlegung des Korbbodens erzielt. Durch das Tieferlegen des Korbbodens wird jedoch der senkrechte Abstand zwischen der Korbunterseite und der vorderen Querverbindung immer kleiner.

Die Aufgabe der Erfindung besteht darin, einen gattungsgemäßen Einkaufswagen so weiterzuentwickeln, daß dessen Ablage in der Verstaustellung einen äußerst kleinen Raumbedarf aufweist, insbesondere aber nicht weit nach unten gerichtet ist.

Die Aufgabe ist dadurch gelöst, daß die Abstellfläche der Ablage durch ein am Fahrgestell oder am Korb angeordnetes ortsfestes Teil, durch ein am Fahrgestell oder am ortsfesten Teil befindliches Schwenkteil und durch ein das Schwenkteil und das ortsfeste Teil verbindendes Halteteil gebildet ist, wobei das Halteteil mit dem Schwenkteil gelenkig und mit dem ortsfesten Teil schiebeführungsartig verbunden ist.

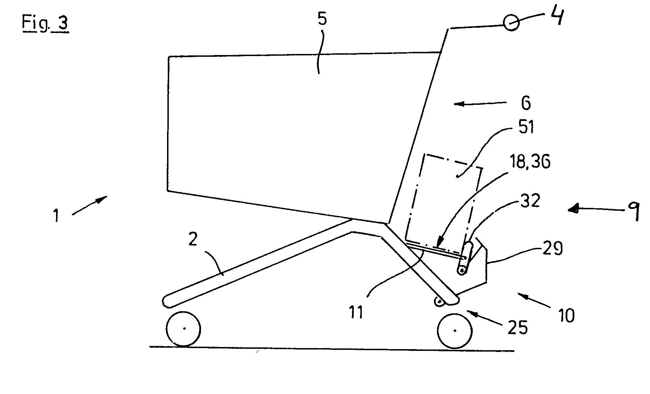

Die Abstellfläche der Ablage wird nunmehr, im Gegensatz zum Stand der Technik, durch drei Abschnitte gebildet, nämlich durch das ortsfeste Teil und durch die beiden beweglichen Teile Schwenkteil und Halteteil. Da das ortsfeste Teil seine Lage nicht verändert, bleiben noch zwei Abschnitte, die es in der Verstaustellung der Ablage platzsparend unterzubringen gilt. Jeder dieser Abschnitte ist durch das Vorhandensein des ortsfesten Teiles zwangsläufig kürzer als die Abschnitte Halteteil und/oder Ablagenabschnitt jener zum Stand der Technik zählenden Ablagen, bei denen die gleiche Tiefe (33cm) auf lediglich zwei Abschnitte aufgeteilt werden muß. Kürzere Abschnitte wiederum beanspruchen eine niedrigere Höhe, was letztendlich auch einen geringeren Raumbedarf für die in der Verstaustellung befindliche Ablage entstehen läßt. Hinzu kommt, daß durch die schiebeführungsartige Anbindung des Halteteiles an das ortsfeste Teil, das Halteteil in der Verstaustellung der Ablage nach oben frei ausweichen kann und über die hinter dein Korbboden angeordnete Ebene des ortsfesten Teiles ragt, siehe auch Fig. 3. Dadurch ist das Halteteil nicht so weit nach unten gerichtet, so daß auch das Stapeln der Einkaufswagen nicht beeinträchtigt wird. Es ist somit in vorteilhafter Weise möglich, mit erfindungsgemäßen Ablagen ausgestattete Einkaufswagen herzustellen, bei denen, wie gefordert, der Korbboden sehr tief angeordnet und demnach der senkrechte Abstand zwischen der hinteren Korbunterkante und der vorderen Querverbindung des Fahrgestelles relativ gering ist.

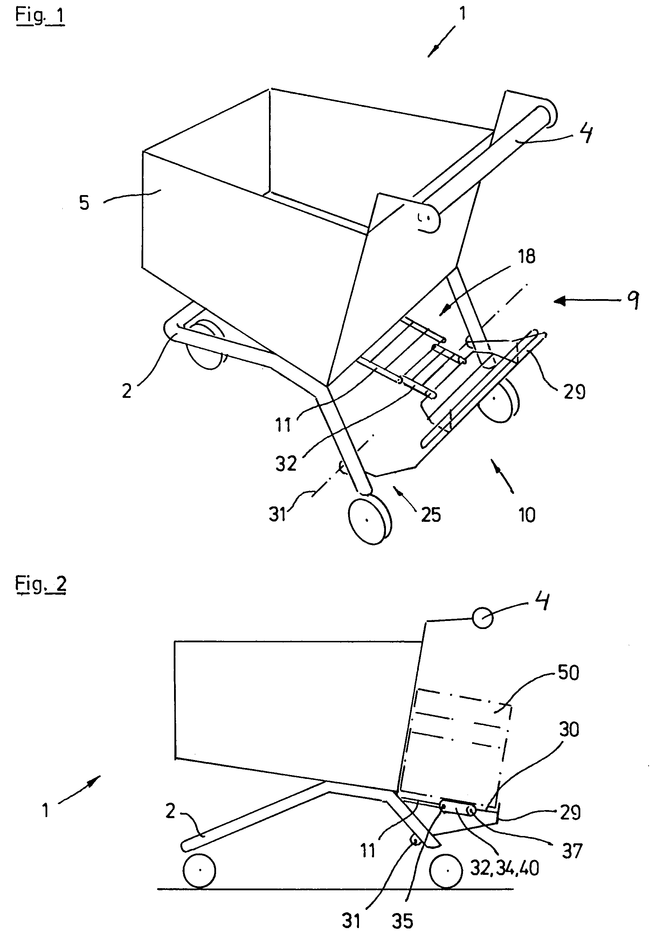

Die in den nachfolgenden Zeichnungen dargestellten Einkaufswagen 1 entsprechen in ihrem Grundaufbau jenen Einkaufswagen 1, wie sie z.B. in der eingangs genannten Patentschrift beschrieben sind. Natürlich sind konstruktive und gestalterische Unterschiede möglich, doch weisen alle in den Figuren 1 bis 3 dargestellten Einkaufswagen 1 ein Fahrgestell 2 auf, das ein Behältnis in der bevorzugten Form eines Korbes 5 trägt. Die Einkaufswagen 1 sind mit einer Schiebeeinrichtung 4 ausgestattet, die sich im rückwärtigen Bereich 9 des Einkaufswagens 1 befindet und die an, Korb 5 oder an, Fahrgestell 2 vorgesehen ist. Die Einkaufswagen 1 sind ferner in bekannter Weise so gestaltet, daß sich gleiche Einkaufswagen 1 ineinanderschieben, also stapeln lassen, wobei, um diesen Zweck erfüllen zu können, die Rückwand 6 der Körbe 5 in bewährter Weise um eine horizontale Achse schwenkbar aufgehängt ist. Alle Einkaufswagen 1 sind mit einer in ihrem rückwärtigen Bereich 9 angeordneten, zum Abstellen von Gegenständen 50 bestimmten Ablage 10 ausgestattet, die nach rückwärts herausklappbar ist und die sich entweder von Hand oder beim Stapeln mehrerer Einkaufswagen 1 von einein hinteren einzuschiebenden Einkaufswagen 1 in die Verstaustellung bewegen läßt.

Bei dem in den Figuren 1 bis 3 beschriebenen Einkaufswagen 1 ist die Ablage 10, vgl. Fig. 1, durch ein ortsfestes Teil 11, durch ein Schwenkteil 29 und durch ein Halteteil 32 gebildet. Das ortsfeste Teil 11, bevorzugt als flächiges, aus Draht gefertigtes Bauteil gestaltet, ist unterhalb des Korbes 5 am Fahrgestell 2 oder am Korb 5 befestigt und ragt nach hinten ein Stück vor. Die Ablage 10 weist ein um eine horizontale Achse 31 verschwenkbares Schwenkteil 29 sowie ein bewegliches Halteteil 32 auf, wobei das Halteteil 32 das Schwenkteil 29 an das ortsfeste Teil 11 koppelt und wobei Anschläge 25 vorgesehen sind, die den Bewegungsbereich der Ablage 10 bestimmen. Im Beispiel ist die Ablage 10 nach hinten herausklappbar, um beispielsweise eine große Getränkekiste 50 aufnehmen zu können. Die Abstellfläche 18 wird durch das ortsfeste Teil 11 und durch die beiden beweglichen Teile Schwenkteil 29 und Halteteil 32 gebildet. Das bewegliche Teil 12 besteht dabei aus dem Schwenkteil 25 und aus dem Halteteil 32.

In einer Seitenansicht zeigt Fig. 2 den gleichen Einkaufswagen 1. Man erkennt das nach hinten auskragende, bevorzugt nach hinten leicht abfallende ortsfeste Teil 11, das einen Querstab 35 aufweist, der zur Aufnahme zweier beabstandeter Schiebeführungen 40 bestimmt ist, die am Halteteil 32 angeordnet sind. Das Halteteil 32 läßt sich somit, den Querstab 35 umgreifend, entlang der Längsrichtung des Einkaufswagens 1 verschieben. Das Halteteil 32 weist ferner zwei Aufnahmen 34 auf, die zur Bildung einer Gelenkverbindung mit einem am Schwenkteil 29 befindlichen Querstab 37 bestimmt sind. Das bevorzugt einen Abstellabschnitt 30 aufweisende Schwenkteil 29 ist um die quer zur Schieberichtung des Einkaufswagens 1 sich erstreckende horizontale Achse 31 schwenkbar am Fahrgestell 2 oder am ortsfesten Teil 11 befestigt. Die Ablage 10 ist aus ihrer Verstaustellung nach hinten herausklappbar oder herausgezogen, nimmt somit die zweite Gebrauchslage ein und trägt beispielsweise eine große Getränkekiste 50.

Fig. 3 zeigt den gleichen Einkaufswagen 1 jedoch mit der in der Verstaustellung befindlichen Ablage 10. Auf dein ortsfesten Teil 11 ist ein Gegenstand, beispielsweise eine kleine Getränkekiste 51 abgestellt. Durch die gewählte Kinematik - Schiebeführung des Halteteiles 32 mit dem ortsfesten Teil 11 und gelenkige Verbindung des Halteteiles 32 mit dem Schwenkteil 29 - sowie durch die entsprechende Anordnung der nicht näher dargestellten Anschläge 25 für die Ablage 10, läßt sich diese so weit in Richtung Rückwand 6 des Korbes 5 verschwenken, bis das Halteteil 32 eine Lage einnimmt, in der es etwa in einem rechten Winkel zur Ebene 36 des ortsfesten Teiles 11 angeordnet ist und dabei ein Stück weit nach oben über die Ebene 36 ragt. In dieser Lage dient das Halteteil 32 der Ablage 10 dazu, den auf dem ortsfesten Teil 11 ruhenden Gegenstand 51 zu stützen, um ihn vor einem Herabfallen von der Ablage 10 zu bewahren. Das Halteteil 32 übernimmt in dieser Lage die Funktion eines Anschlags, während es in herausgeklappter Lage der Ablage 10 bevorzugt einen Teil der Abstellfläche 18 der Ablage 10 bildet. Aus der Zeichnung erkennt man ferner, daß die für die Ablage 10 gewählte Kinematik so ausgebildet ist, daß durch den leichten Druck, den der Gegenstand 51 auf das nun als Anschlag wirkende Halteteil 32 ausübt, die Ablage 10 bestrebt ist, sich noch weiter in die Verstaustellung zu bewegen. Die Ablage 10 öffnet sich also nicht von selbst, sondern sie drückt vielmehr den Gegenstand gegen die Rückwand 6 des Korbes 5, so daß der Effekt einer Selbsthemmung eintritt. Die Lage der Anschläge 25, welche den Bewegungsbereich der Ablage 10 bestimmen, sind so gewählt, daß die Ablage 10 in ihrer Verstaustellung oder nach der Entnahme des Einkaufswagens 1 aus einer Reihe gestapelter Einkaufswagen 1 bereits eine erste Gebrauchslage einnimmt, in der sie zusammen mit dem ortsfesten Teil 11 zum Abstellen kleinerer Gegenstände 51 geeignet ist und durch Herausziehen zumindest eine zweite Gebrauchslage einnimmt, in der sie zur Aufnahme von größeren Gegenständen 50, insbesondere von Getränkekisten bestimmt ist.

## Patentansprüche

1. Stapelbarer Einkaufswagen (1), mit einem Fahrgestell (2), das einen Korb (5) trägt, mit einer Schiebeeinrichtung (4) und mit einer im rückwärtigen Bereich (9) angeordneten, eine Abstellfläche (18) aufweisenden und zum Abstellen von Gegenständen bestimmten Ablage (10), die nach rückwärts herausklappbar oder herausziehbar ist und die entweder von Hand oder beim Stapeln mehrerer Einkaufswagen (1) von einem hinteren einzuschiebenden Einkaufswagen (1) in eine Verstaustellung bewegbar ist, dadurch **gekennzeichnet,** daß die Abstellfläche (18) durch ein am Fahrgestell (2) oder am Korb (5) angeordnetes ortsfestes Teil (11), durch ein am Fahrgestell (2) oder am ortsfesten Teil (11) befindliches Schwenkteil (29) und durch ein das Schwenkteil (29) und das ortsfeste Teil (11) verbindendes Halteteil (32) gebildet ist, wobei das Halteteil (32) mit den, Schwenkteil (29) gelenkig und mit dem ortsfesten Teil (11) schiebeführungsartig verbunden ist.

2. Stapelbarer Einkaufswagen nach Anspruch 1, dadurch **gekennzeichnet,** daß das ortsfeste Teil (11) nach hinten leicht abfällt.

3. Stapelbarer Einkaufswagen nach Anspruch 1 oder 2, dadurch **gekennzeichnet,** daß das ortsfeste Teil (11) einen Querstab (35) aufweist, der zur Aufnahme zweier beabstandeter Schiebeführungen (40) bestimmt ist, die am Halteteil (32) angeordnet sind.

4. Stapelbarer Einkaufswagen nach einem der Ansprüche 1 bis 3, dadurch **gekennzeichnet,** daß das Halteteil (32) in der Verstaustellung der Ablage (10) ein Stück weit nach oben über die Ebene (36) des ortsfesten Teiles (11) ragt.

5. Stapelbarer Einkaufswagen nach einem der Ansprüche 1 bis 4, dadurch **gekennzeichnet,** daß das Halteteil (32) in der Verstaustellung der Ablage (10) einen Anschlag für einen auf dem ortsfesten Teil (11) abgestellten Gegenstand (51) bildet.

6. Stapelbarer Einkaufswagen nach einem der Ansprüche 1 bis 5, dadurch **gekennzeichnet,** daß die Ablage (10) in der Verstaustellung eine erste Gebrauchslage und in der nach hinten herausgeklappten Lage eine zweite Gebrauchslage einnimmt.

## Claims

1. A stackable shopping trolley (1), having a wheel frame (2) bearing a basket (5), having a pushing arrangement (4) and having a rack (10) which is arranged in the rear region (9), has a deposit surface (18), is for the depositing of objects, can be folded out or pulled out rearwards and can be moved into a stowage position either manually or, when stacking a plurality of shopping trolleys (1), by a rear shopping trolley (1) to be pushed-in,
characterised in that the deposit surface (18) is formed by a fixed part (11) arranged on the wheel frame (2) or on the basket (5), by a pivot part (29) located on the wheel frame (2) or on the fixed part (11) and by a holding part (32) connecting the pivot part (29) and the fixed part (11), the holding part (32) being connected to the pivot part (29) in an articulated manner and to the fixed part (11) in a slide-guide-like manner.

2. A stackable shopping trolley in accordance with Claim 1, characterised in that the fixed part (11) has a slight downwards slope rearwards.

3. A stackable shopping trolley in accordance with Claim 1 or 2, characterised in that the fixed part (11) has a transverse bar (35) for receiving two spaced-apart slide guides (40) arranged on the holding part (32).

4. A stackable shopping trolley in accordance with any one of Claims 1 to 3, characterised in that in the stowage position of the rack (10), the holding part (32) projects upwards a bit beyond the plane (36) of the fixed part (11).

5. A stackable shopping trolley in accordance with any one of Claims 1 to 4, characterised in that in the stowage position of the rack (10), the holding part (32) forms a stop for an object (51) deposited on the fixed part (11).

6. A stackable shopping trolley in accordance with any one of Claims 1 to 5, characterised in that the rack (10) occupies a first utilisation position in the stowage position and a second utilisation position in the folded-out rearwards position.

## Revendications

1. Chariot à provisions emboîtable (1), avec un châssis (2), qui porte un panier (5), avec un dispositif de poussée (4) et avec un casier (10), disposé dans la région arrière (9), présentant une surface de dépose (18) et destiné à recevoir des objets, casier qui peut être déployé vers l'arrière par rabattement ou par traction et qui peut être déplacé dans une position de rangement, soit à la main, soit par un chariot à provisions (1) enfilé par l'arrière lors de l'emboîtement de plusieurs chariots à provisions (1), **caractérisé** en ce que la surface de dépose (18) est formée par une partie fixe (11) disposée sur le châssis (2) ou sur le panier (5), une partie pivotante (29) se trouvant sur le châssis (2) ou sur la partie fixe (11), et une partie de maintien (32) reliant la partie pivotante (29) et la partie fixe (11), la partie de maintien (32) étant reliée à la partie pivotante (29) de façon articulée, et à la partie fixe (11) à la manière d'une coulisse.

2. Chariot à provisions emboîtable selon la revendication 1, **caractérisé** en ce que la partie fixe (11) est à pente légèrement descendante vers l'arrière.

3. Chariot à provisions emboîtable selon la revendication 1 ou 2, **caractérisé** en ce que la partie fixe (11) présente une barre transversale (35), qui est destinée à recevoir deux coulisses distantes (40) qui sont disposées sur la partie de maintien (32).

4. Chariot à provisions emboîtable selon une des revendications 1 à 3, **caractérisé** en ce que, dans la position de rangement du casier (10), la partie de maintien (32) dépasse légèrement vers le haut au-dessus du plan (36) de la partie fixe (11).

5. Chariot à provisions emboîtable selon une des revendications 1 à 4, **caractérisé** en ce que, dans la position de rangement du casier (10), la partie de maintien (32) constitue une butée pour un objet (51) déposé sur la partie fixe (11).

6. Chariot à provisions emboîtable selon une des revendications 1 à 5, **caractérisé** en ce que le casier (10) prend une première position d'utilisation dans la position de rangement, et une deuxième position d'utilisation dans la position déployée vers l'arrière.
